# EUROPÄISCHE PATENTANMELDUNG

(11) **EP 2 762 392 A2**
(43) Veröffentlichungstag der Anmeldung: **06.08.2014**
(21) Anmeldenummer: 14000431.8
(22) Anmeldetag: 05.02.2014
(51) Int. Cl.: B62D 29/04, B29C 70/00, B32B 37/02

(54) **Karosserie- oder Verkleidungsbauteil für ein Kraftfahrzeug und Verfahren zum Herstellen**

(30) Priorität: 05.02.2013 DE 102013001914
(71) Anmelder: KAMEI automotive GmbH, 38448 Wolfsburg (DE)
(72) Erfinder: Schulze, Dirk, 29378 Wittingen (DE)
(74) Vertreter: Friedrich, Andreas

(57) **Zusammenfassung**

Karosserie- oder Verkleidungsbauteil für ein Kraftfahrzeug, wobei das Karosserie- oder Verkleidungsbauteil
ein Außenbauteil (6) mit einer Innenseite und einer Außenseite und ein Innenbauteil aufweist, das
an der Innenseite des Außenbauteils (6) angeordnet ist,

wobei
das Innenbauteil (10) aus einem Kohlefaserverbundwerkstoff das Außenbauteil (6) aus einem Kunststoff
oder
das Außenbauteil (6) aus einem Kohlefaserverbundwerkstoff und das Innenbauteil (10) aus einem Kunststoff besteht.

## Beschreibung

Die Erfindung betrifft ein Karosserie- oder Verkleidungsbauteil für ein Kraftfahrzeug, wobei das Karosserie- oder Verkleidungsbauteil ein Außenbauteil mit einer Innenseite und ein Innenbauteil aufweist, das an der Innenseite des Außenbauteiles angeordnet ist. Die Erfindung betrifft zudem ein Verfahren zum Herstellen eines derartigen Karosserie- oder Verkleidungsbauteiles.

Derartige Karosserie- oder Verkleidungsbauteile für Kraftfahrzeuge können an unterschiedlichsten Positionen des Kraftfahrzeuges verwendet werden. Sie können beispielsweise als Front- oder Heckschürzen, Spoiler an unterschiedlichsten Positionen des Kraftfahrzeuges sowie beispielsweise Verkleidungen von Außen- und Rückspiegeln verwendet werden. Zudem können sie als Bauteile zum Einsatz kommen, die nicht serienmäßig vom Hersteller des Kraftfahrzeuges vorgesehen sind, wie beispielsweise Dachaufsätze und- träger für Kraftfahrzeuge, die beispielsweise Sondersignalanlagen oder Stauraumelemente für Gepäck tragen. Karosserie- und Verkleidungsbauteile im Sinne der vorliegenden Erfindung sind folglich insbesondere die bei einem montierten Kraftfahrzeug von außen sichtbaren Verkleidungselemente.

Als Dachaufsatz sind entsprechende Karosserie- und Verkleidungsbauteile beispielsweise aus der DE 10 2010 011 042 A1 bekannt. Neben ihrer aerodynamischen Form müssen diese Dachaufsätze insbesondere für Einsatzfahrzeuge, bei denen sie als Träger für Sondersignalanlagen fungieren, eine Reihe sicherheitsrelevanter Anforderungen erfüllen. Insbesondere im Falle eines Unfalls des Kraftfahrzeuges, beispielsweise bei einem Überschlag, muss gewährleistet sein, dass sich der Dachaufsatz nicht in die Fahrgastzelle eindrückt, sondern im Wesentlichen formstabil auf dem Dach des Einsatzfahrzeuges verbleibt. Aus dem Stand der Technik sind Dachaufsätze bekannt, bei denen ein Außenbauteil aus einem leichten Kunststoff mit einem Füllteil aus einem Kunststoffschaum vollständig ausgefüllt wird. Diese Art von Dachaufsätzen erreicht jedoch keine besonders gute Formstabilität und Verwindungssteifigkeit.

Insbesondere Karosserie- und Verkleidungsbauteile, die den Luftwiderstand des Kraftfahrzeuges in gezielter Weise beeinflussen sollen, also beispielsweise Front- und Heckspoiler müssen ebenfalls eine besonders gute Formstabilität und Verwindungssteifigkeit aufweisen.

Zusätzlich zu diesen aerodynamischen und sicherheitstechnischen Aspekten sollten gattungsgemäße Karosserie- oder Verkleidungsbauteile ein möglichst geringes Eigengewicht aufweisen, um einen möglichst geringen zusätzlichen Kraftstoffverbrauch zur Folge zu haben. Zudem ist es von Vorteil, wenn Fahrgeräusche, beispielsweise durch den anströmenden Fahrtwind, möglichst nicht in die Fahrgastzelle geleitet werden, so dass die Geräuschbelastung für den Fahrer und weitere Personen, die sich in dem Kraftfahrzeug befinden, möglichst gering bleibt. Schlussendlich kommt den gattungsgemäßen Karosserie- und Verkleidungsbauteilen auch ein ästhetischer Aspekt zu. Durch die besondere Formgebung oder Farbgestaltung sowie eine gegebenenfalls vorhandene spezielle Musterung, kann auch der optische Gesamteindruck des Kraftfahrzeuges aufgewertet und nach den Wünschen des jeweiligen Kunden beeinflusst werden.

Der Erfindung liegt folglich die Aufgabe zugrunde, ein Karosserie- oder Verkleidungsbauteil so weiterzuentwickeln, dass ein möglichst geringes Eigengewicht aufweist, Fahrgeräusche möglichst wenig ins Innere des Kraftfahrzeugs leitet und zudem schnell, einfach und kostengünstig herstellbar ist und eine gewünschte optische Gestaltung ermöglicht. Die Erfindung löst die gestellte Aufgabe durch ein Karosserie- oder Verkleidungsbauteil für ein Kraftfahrzeug gemäß dem Oberbegriff des Anspruchs 1, das sich dadurch auszeichnet, dass das Innenbauteil aus einem Kohlefaserverbundwerkstoff und das Außenbauteil aus einem Kunststoff oder Außenbauteil aus einem Kohlefaserverbundwerkstoff und das Innenbauteil aus einem Kunststoff bestehen.

Durch die Herstellung eines der beiden Bauteile aus einem Kohlefaserverbundwerkstoff wird eine gute Formstabilität und hohe Verwindungssteifigkeit bei gleichzeitig geringem Eigengewicht erreicht. Wird das Innenbauteil aus dem Kohlefaserverbundwerkstoff hergestellt, kann das Außenbauteil, das im montierten Zustand am Kraftfahrzeug sichtbar ist, aus einem Kunststoff hergestellt werden, der optisch an die Wünsche des jeweiligen Kunden angepasst ist.

Kohlerfaserverbundwerkstoff zeichnen sich jedoch zusätzlich durch ein besonderes Aussehen aus, das in vielen Anwendungen, beispielsweise bei der optischen Gestaltung von Kraftfahrzeugelementen, gewünscht ist. Daher ist es auch möglich, bei einem erfindungsgemäßen Karosserie- oder Verkleidungsbauteil das Innenbauteil aus Kunststoff und das Außenbauteil aus dem Kohlefaserverbundwerkstoff herzustellen. Dies ist beispielsweise für den Fall interessant, dass am Kraftfahrzeug vorhandene Bauteile, wie beispielsweise die Verkleidung von Außenspiegeln, Spoilerelemente oder Front- oder Heckschürzen optisch anders gestaltet und mit dem für Kohlefaserverbundwerkstoff typischen Aussehen versehen werden sollen. Das aus dem Kunststoff bestehende Innenbauteil kann in diesem Fall das vom Hersteller verwendete Bauteil sein, das lediglich mit einer Schicht des Kohlefaserverbundwerkstoffes überzogen wurde. Auch hier wird neben dem gewünschten optischen Effekt eine besonders gute Formstabilität und Verwindungssteifigkeit erreicht, was insbesondere für Spoilerelemente von Vorteil ist. Zudem weisen die Bauteile weiterhin ein sehr geringes Eigengewicht auf. In einer bevorzugten Ausgestaltung verfügt das Innenbauteil über eine Außenseite, mit der vollflächig an der Innenseite des Außenbauteils anliegt. Dadurch werden Hohlräume und Lücken zwischen den beiden Bauteilen vermieden, die als gute Schallleiter dafür sorgen würden, dass Fahrgeräusche, insbesondere des Fahrtwindes, ins Innere des Kraftfahrzeuges geleitet würden. Außerdem wird auf diese Weise gewährleistet, dass über den gesamten Körper des Karosserie- oder Verkleidungsbauteiles und seine gesamte äußere Kontur eine möglichst einheitliche Steifigkeit und Festigkeit erreicht wird, ohne dass es Bereiche gibt, die sich leichter verformen oder beschädigen lassen.

Vorteilhafterweise handelt es sich bei dem Karosserie- oder Verkleidungsbauteil um einen Dachaufsatz, bei dem das Außenbauteil aus dem Kunststoff hergestellt ist und das Innenbauteil als Grundplattenelement ausgeführt ist.

Vorteilhafterweise weist das Karosserie- oder Verkleidungsbauteil wenigstens zwei Befestigungselemente zum Befestigen an zwei voneinander beabstandeten Positionen des Kraftfahrzeugdaches auf, die ausgebildet und angeordnet sind, um das Karosserie- oder Verkleidungsbauteil an der Reling und/oder in einer Schiebedachausnehmung des Kraftfahrzeugdaches zu befestigen. Auf diese Weise wird gewährleistet, dass das Dach des Kraftfahrzeuges beim Anbauen des Karosserie- oder Verkleidungsbauteiles nicht beschädigt wird oder umgebaut werden muss, wodurch der Wiederverkaufswert des Kraftfahrzeugs deutlich sinken würde. Je nach Größe, Gewicht und Luftwiderstand des Verkleidungsbauteiles kann beispielsweise die Anzahl der Befestigungselemente sowie ihre tatsächliche Position variiert und entsprechend gewählt werden. So ist es für leichte und kleine Karosserie- oder Verkleidungsbauteile gegebenenfalls ausreichend, beispielsweise je ein Befestigungselement vorzusehen, das für jeweils eine Reling des jeweiligen Kraftfahrzeugdaches vorgesehen ist. Sollen zusätzliche Aufbauten, wie beispielsweise Sondersignalanlagen oder Gepäckstauräume an dem Karosserie- oder Verkleidungsbauteil, das vorzugsweise der Dachaufsatz ist, angeordnet werden, die den Luftwiderstand und/oder das Eigengewicht erhöhen, muss neben einem gegebenenfalls stärker auszubildenden Grundplattenelement bzw. Innenbauteil oftmals auch die Anzahl und/oder die Position der einzelnen Befestigungselemente angepasst werden. Als bevorzugt hat sich dabei herausgestellt, wenn die Befestigungselemente einstückig mit dem Grundplattenelement ausgebildet sind. Dies sorgt für eine optimale Stabilität und spart zudem bei der Herstellung des Dachaufsatzes Verfahrensschritte ein, so dass die Herstellungskosten sinken.

Alternativ dazu ist es natürlich auch möglich, Befestigungselemente am Grundplattenelement zu befestigen, beispielsweise Metallelemente an das Grundplattenelement zu montieren, beispielsweise zu schrauben, zu kleben oder zu clipsen.

Vorzugsweise weist das Grundplattenelement ein Lochbild auf, das Löcher für eine Verkabelung und eine Montage von Sondersignalanlagen aufweist, die auf dem Dachaufsatz montierbar sind. Auch hierfür hatte sich als vorteilhaft herausgestellt, dass das Grundplattenelement aus dem Kohlefaserverbundwerkstoff hergestellt ist, da in diesen besonders leicht, beispielsweise mittels bohren, Löcher an den gewünschten Positionen eingebracht werden können. Es ist somit nicht mehr nötig, für unterschiedliche Hersteller und/oder Typen beispielsweise von Sondersignalanlagen unterschiedliche Grundplattenelemente vorzusehen, die sich im Wesentlichen im Lochbild unterscheiden.

In einer bevorzugten Ausgestaltung des vorliegenden Karosserie- oder Verkleidungsbauteiles ist an dem Außenbauteil eine Dichtung angeordnet, die das Karosserie- oder Verkleidungsbauteil in einem montierten Zustand gegen das Dach des Kraftfahrzeuges abdichtet. Dadurch wird einerseits das Eindringen von Feuchtigkeit verhindert, das insbesondere für den Fall von Nachteil wäre, wenn ein Dachaufsatz in einer Schiebedachausnehmung des Kraftfahrzeuges angeordnet ist. Andererseits wird auch das Einströmen von Luft, beispielsweise Fahrtwind verhindert, so dass die Fahrgeräusche vermindert werden.

Die Erfindung löst die gestellte Aufgabe zudem durch ein Verfahren zum Herstellen eines beschriebenen Karosserie- oder Verkleidungsbauteiles. Dieses Verfahren umfasst die folgenden Schritte:
a) Bereitstellen eines ersten Bauteils aus einem Kunststoff,
b) Anordnen eines Rohmaterials für den Kohlefaserverbundwerkstoff an dem ersten Bauteil,
c) Aushärten des Kohlefaserverbundwerkstoffes.

Im ersten Verfahrensschritt wird folglich zunächst ein erstes Bauteil bereitgestellt, bei dem es sich um das Innenbauteil oder das Außenbauteil handelt. Dieses ist aus Kunststoff hergestellt. Das erste Bauteil kann entweder separat durch ein aus dem Stand der Technik bekanntes Verfahren, beispielsweise Spritzguss- oder Tiefziehverfahren, hergestellt werden oder es wird ein bereits am Kraftfahrzeug vorhandenes Bauteil, wie beispielsweise eine Verkleidung oder ein Spoilerelement, für das beschriebene Verfahren verwendet. Das erste Bauteil dient als Form, an der das Rohmaterial für den Kohlefaserverbundwerkstoff angeordnet wird. Als Rohmaterial dienen in der Regel sogenannte Prepregs. Dabei handelt es sich um Fasermatten oder Matten aus Gewebe der einzelnen Fasern, die beispielsweise mit einem Kunstharz imprägniert sind. Diese Platten können leicht zugeschnitten und in die gewünschte Form gebracht werden und liefern, sofern gewünscht, das für Kohlefaserverbundwerkstoffe typische optische Erscheinungsbild. Die Bereiche des ersten Bauteils, die später mit dem zweiten Bauteil aus dem Kohlefaserverbundwerkstoff verbunden sein sollen, werden nun in dem zweiten Verfahrensschritt mit den Prepregs oder dem Rohmaterial für den Kohlefaserverbundwerkstoff ausgekleidet. Die kann einer Innenseite eines Bauteils geschehen, sofern es sich bei dem ersten Bauteil um das Außenbauteil handelt. Alternativ kann auch eine Oberfläche des Innenbauteils verkleidet werden, sofern das erste Bauteil das Innenbauteil ist.

Beim späteren Aushärten des Kohlefaserverbundwerkstoffes kommt es zu einer besonders festen und einfachen Verbindung zwischen den beiden Bauteilen. Dadurch werden weitere Verfahrensschritte, in denen die beiden Bauteile aneinander befestigt werden, sowie dafür benötigte Befestigungselemente wie Schrauben, Nieten oder Klebstoffe, überflüssig.

Zudem kann bereits während des Anordnens des Rohmaterials entschieden werden, welche Dicke das spätere Bauteil aus dem Kohlefaserverbundwerkstoff an den einzelnen Stellen aufweisen soll. Mechanisch besonders belastete Stellen oder Positionen, die beispielsweise bei einem Überschlag des Kraftfahrzeuges besonders beansprucht werden, können gegebenenfalls dicker ausgestaltet werden, um gegebenenfalls auftretenden starken Belastungen besser standhalten zu können. Die gewünschte Dicke kann zudem davon abhängen, für welchen Zweck das spätere Karosserie- oder Verkleidungsbauteil verwendet werden soll. Soll beispielsweise auf einem Dachaufsatz ein schwerer Aufbau angeordnet werden, muss das aus dem Kohlefaserverbundwerkstoff hergestellte Bauteil stärker ausgebildet werden, so dass im Verfahrensschritt b) eine größere Menge des Rohmaterials verwendet wird. Bei Spoilerelementen spielt naturgemäß die Größe und die Position am Kraftfahrzeug eine Rolle.

In einem späteren Verfahrensschritt kann vorteilhafterweise in Lochbild in die Kombination aus Außenbauteil und Innenbauteil eingebracht werden, dass Löcher für eine Verkabelung und Montage von gegebenenfalls zu montierenden Sondersignalanlagen oder Beleuchtungselementen aufweist.

Vorteilhafterweise werden vorgefertigte Befestigungselemente an dem ersten Bauteil so angeordnet, dass sie nach dem Aushärten des Rohmaterials mit dem Kohlefaserverbundwerkstoff verbunden sind. Dies ist für den Fall sinnvoll, dass die einzelnen Befestigungselemente als vorgefertigte Bauteile vorliegen. Werden sie einstückig mit dem aus Kohlefaserverbundwerkstoff hergestellten Bauteil hergestellt, können auch die einzelnen Befestigungselemente im zweiten Verfahrensschritt durch das Anordnen des Rohmaterials mit modelliert und anschließend ausgehärtet werden. Oftmals sind die Befestigungselemente, beispielsweise bei Dachaufsätzen, jedoch an die exakte geometrische Form beispielsweise einer Reling des Kraftfahrzeuges angepasst, die bei unterschiedlichen Kraftfahrzeugherstellern unterschiedlich ausgebildet sein können. Daher ist es in diesen Fällen sinnvoll, vorgefertigte Befestigungselemente zu verwenden. Beim Aushärten des Kohlefaserverbundwerkstoffes kommt es somit auch hier zu einer festen und sichereren Verbindung zwischen dem Kohlefaserverbundwerkstoff und den Befestigungselementen.

Alternativ können natürlich auch das Innenbauteil und das Außenbauteil als separate vorgefertigte Bauteile verwendet werden. Diese werden in einem späteren Verfahrensschritt aneinander befestigt, beispielsweise geklebt, geschraubt oder genietet. Hier ist natürlich jede andere Form der Befestigung ebenfalls denkbar.

Diese Herstellung ist besonders dann von Vorteil, wenn die beiden Bauteile aus bestimmten Gründen nicht vollflächig aneinander anliegen sollen oder beispielsweise zwischen den einzelnen Bauteilen weitere Elemente, beispielsweise Kabelführungsschächte, Isolationselemente oder sonstige Bauteile angeordnet werden sollen.

Mit Hilfe einer Zeichnung wird nachfolgend ein Ausführungsbeispiel der vorliegenden Erfindung näher erläutert. Es zeigt
- Figur 1: - ein Karosserie- oder Verkleidungsbauteil in Form eines Dachaufsatzes gemäß einem ersten Ausführungsbeispiel der vorliegenden Erfindung im montierten Zustand mit einer darauf angeordneten Sondersignalanlage,
- Figur 2: - eine schematische Explosionszeichnung eines Dachaufsatzes,
- Figur 3: - die schematische Darstellung der Unterseite des Dachaufsatzes,
- Figur 4: - einen Dachaufsatz gemäß einem zweiten Ausführungsbeispiel der vorliegenden Erfindung im montierten Zustand mit einer darauf angeordneten Sondersignalanlage und
- Fig. 5 und 6: - zwei schematische Ansichten eines Karosserie- oder Verbindungsbauteiles in Form einer Außenspiegelkappe.

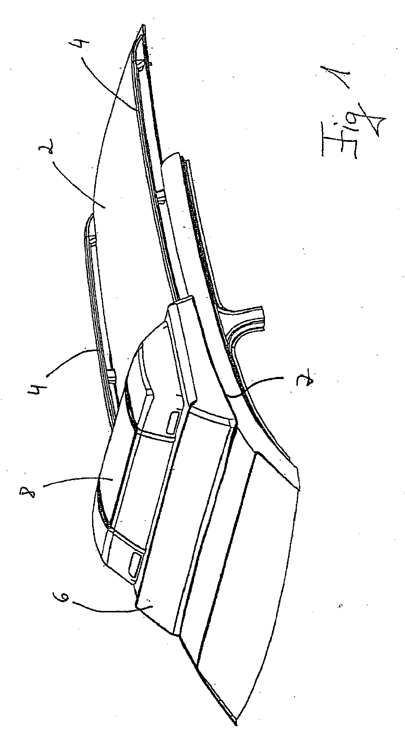

In Figur 1 ist ein Kraftfahrzeugdach 2 gezeigt, an dem zwei Relings 4 angeordnet sind. Im vorderen Teil dieser Relings 4 ist ein Karosserie- oder Verkleidungselement in Form eines Dachaufsatzes gemäß einem ersten Ausführungsbeispiel der vorliegenden Erfindung angeordnet, der über ein Außenbauteil 6 verfügt. Dieses besteht aus einem Kunststoff und ist für die aerodynamische Form des Dachaufsatzes verantwortlich. Im in Figur 1 gezeigten Ausführungsbeispiel ist der Dachaufsatz an den Relings 4 des Kraftfahrzeugdaches 2 angeordnet. Am Außenbauteil 6 ist eine Dichtung 7 angeordnet, die das Außenbauteil 6 gegen das Kraftfahrzeugdach 2 abdichtet. Auf diese Weise ist gewährleistet, dass kein Wasser ins Innere des Dachaufsatzes gelangen kann und zudem die Fahrgeräusche reduziert werden. Auf dem Außenbauteil 6 befindet sich in dem in Figur 1 gezeigten Ausführungsbeispiel eine Sondersignalanlage 8.

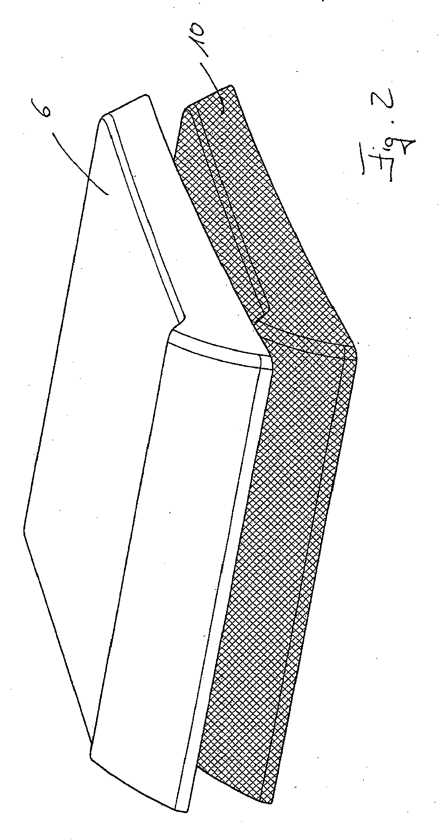

Figur 2 zeigt eine schematische Explosionszeichnung des Dachaufsatzes aus Figur 1. Der Dachaufsatz verfügt neben dem Außenbauteil 6 zudem über ein Innenbauteil 10, das aus einem Kohlefaserverbundwerkstoff hergestellt ist und im gezeigten Ausführungsbeispiel als Grundplattenelement vorliegt. Man erkennt, dass die Außenkontur des Innenbauteiles 10, dessen Außenseite dargestellt ist, der Form des Außenbauteils 6 folgt, so dass beide Bauteile im montierten Zustand vollflächig aneinander anliegen. Dadurch wird über den gesamten Bereich des Außenbauteils 6 die erhöhte Stabilität, die durch den Kohlefaserverbundwerkstoff des Innenbauteiles 10 ermöglicht wird, erreicht.

Sowohl in dem Außenbauteil 6 als auch in dem Innenbauteil 10 kann zudem ein Lochbild vorgesehen sein, dass zum Durchführen von Verkabelungen oder Befestigungselementen dient, um weitere Bauteile, beispielsweise die Sondersignalanlage 8 am Dachaufsatz zu befestigen.

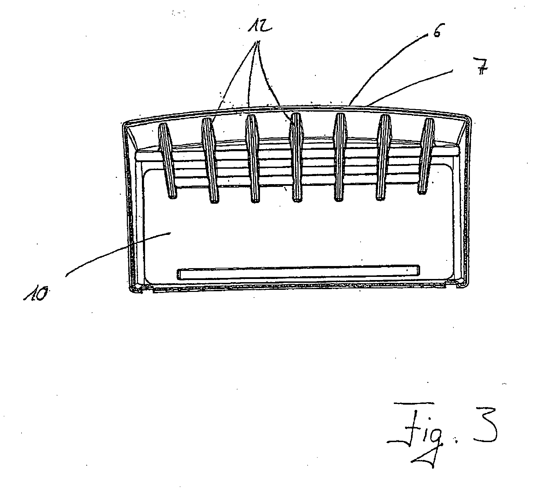

Figur 3 zeigt eine Ansicht eine Unterseite des Dachaufsatzes. In diesem Fall ist am Innenbauteil 10 eine Mehrzahl von Rippen 12 dargestellt, die aus dem Kohlefaserverbundwerkstoff des Innenbauteiles 10 hergestellt sind und für eine erhöhte Stabilität sorgen. Auch hier ist wieder die Dichtung 7 dargestellt, die im montierten Zustand das Außenbauteil 6 gegen das Kraftfahrzeugdach 2 abdichtet. Vorteilhafterweise werden die Rippen 12 im zweiten Verfahrensschritt eines erfindungsgemäßen Verfahrens während des Anordnens des Rohmaterials für den Kohlefaserverbundwerkstoff hergestellt. Da das Rohmaterial für den Kohlefaserverbundwerkstoff einfach und leicht formbar ist, lassen sich auch komplizierte Strukturen kostengünstig erreichen.

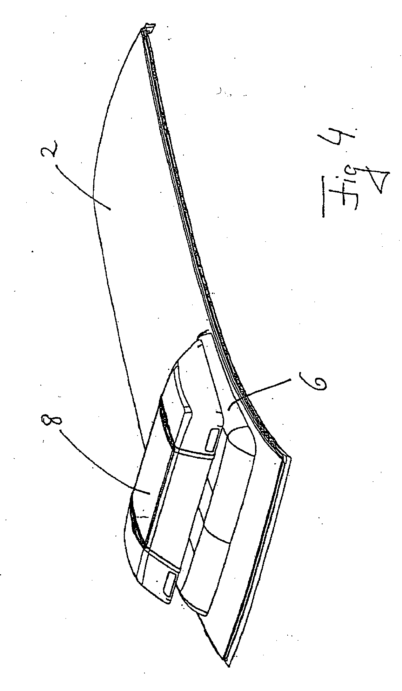

Figur 4 zeigt einen Dachaufsatz gemäß einem zweiten Ausführungsbeispiel der vorliegenden Erfindung im montierten Zustand. Das Kraftfahrzeugdach 2 weist in dem in Figur 4 gezeigten Ausführungsbeispiel keine Reling 4 auf, so dass der Dachaufsatz in eine in Figur 4 nicht dargestellte Schiebedachausnehmung des Kraftfahrzeugdaches 2 eingesetzt wird.

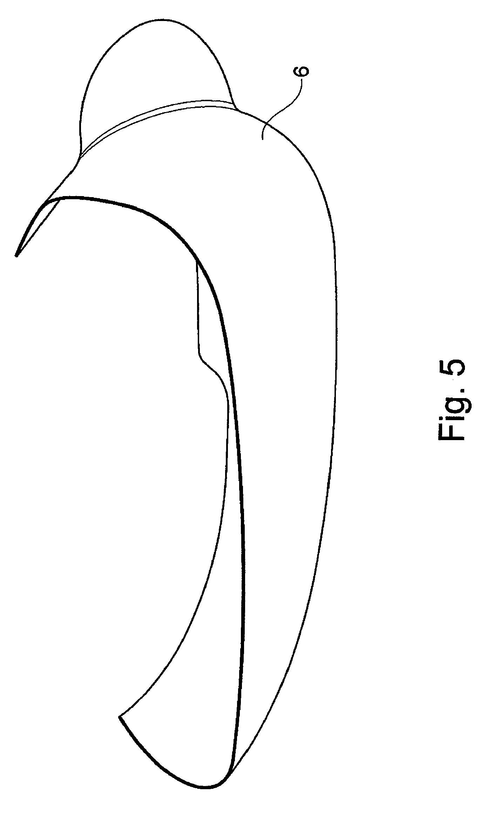

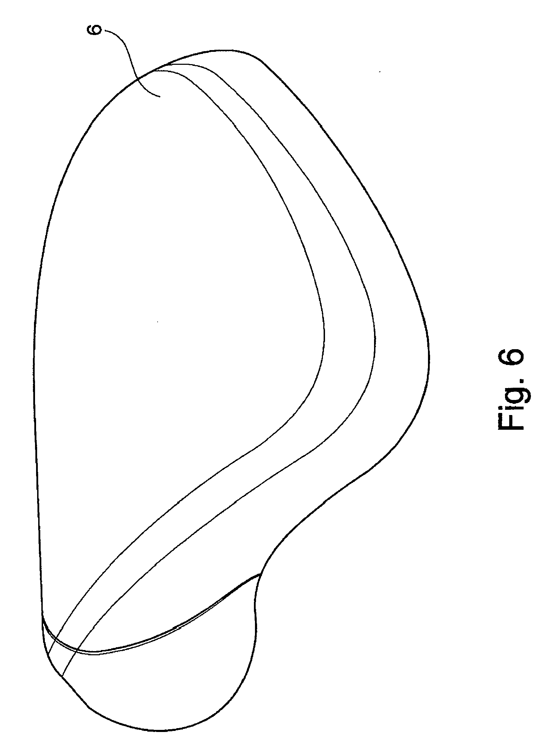

Die Figuren 5 und 6 zeigen das Außenbauteil 6 eines Karosserie- oder Verkleidungsbauteiles gemäß einem weiteren Ausführungsbeispiel der vorliegenden Erfindung. Es handelt sich um das Außenbauteil 6 einer Außenspiegelverkleidung. In diesem Fall steht das Außenbauteil 6 aus dem Kohlefaserverbundwerkstoff und kann beispielsweise hergestellt werden, indem die ursprünglich am Kraftfahrzeug vorgesehene Außenspiegelverkleidung als Innenbauteil 10 verwendet wird. In diesem Fall kann beispielsweise das Rohmaterial für den Kohlefaserverbundwerkstoff auf das Innenbauteil 10 aufgebracht werden.

Dadurch entsteht das in den Figuren 5 und 6 dargestellte Außenbauteil 6.

### Bezugszeichenliste

- 2: Kraftfahrzeugdach
- 4: Reling
- 6: Außenbauteil
- 7: Dichtung
- 8: Sondersignalanlage
- 10: Innenbauteil
- 12: Rippen

## Patentansprüche

1. Karosserie- oder Verkleidungsbauteil für ein Kraftfahrzeug, wobei das Karosserie- oder Verkleidungsbauteil
ein Außenbauteil (6) mit einer Innenseite und
ein Innenbauteil aufweist, das
an der Innenseite des Außenbauteils (6) angeordnet ist,
**dadurch gekennzeichnet dass**,
das Innenbauteil (10) aus einem Kohlefaserverbundwerkstoff das Außenbauteil (6) aus einem Kunststoff
oder
das Außenbauteil (6) aus einem Kohlefaserverbundwerkstoff und das Innenbauteil (10) aus einem Kunststoff bestehen.

2. Karosserie- oder Verkleidungsbauteil nach Anspruch 1, **dadurch gekennzeichnet, dass** das Innenbauteil (10) eine Außenseite aufweist, mit der es vollflächig an der Innenseite des Außenbauteils (6) anliegt.

3. Karosserie- oder Verkleidungsbauteil nach Anspruch 1 oder 2, **dadurch gekennzeichnet, dass** das Karosserie- oder Verkleidungsbauteil ein Dachaufsatz ist, bei dem das Außenbauteil (6) aus dem Kunststoff hergestellt ist und das Innenbauteil (10) als Grundplattenelement ausgeführt ist.

4. Karosserie- oder Verkleidungsbauteil nach Anspruch 3, **dadurch gekennzeichnet, dass** es wenigstens zwei Befestigungselemente zum Befestigen an zwei voneinander beabstandeten Positionen eines Kraftfahrzeugdaches (2) des Kraftfahrzeuges aufweist, die ausgebildet und angeordnet sind, um das Karosserie- oder Verkleidungsbauteil an einer Reling (4) und/oder in einer Schiebedachausnehmung des Kraftfahrzeugdaches (2) zu befestigen.

5. Karosserie- oder Verkleidungsbauteil nach Anspruch 3 oder 4, **dadurch gekennzeichnet, dass** die Befestigungselemente einstückig mit dem Grundplattenelement ausgebildet sind.

6. Karosserie- oder Verkleidungsbauteil nach einem der Ansprüche 3 bis 5, **dadurch gekennzeichnet, dass** das Grundplattenelement ein Lochbild aufweist, das Löcher für eine Kabelung und eine Montage von Sondersignalanlagen (8) aufweist, die auf dem Dachaufsatz montierbar sind.

7. Karosserie- oder Verkleidungsbauteil nach einem der Ansprüche 3 bis 6, **dadurch gekennzeichnet, dass** an dem Außenbauteil (6) eine Dichtung (7) angeordnet ist, die das Karosserie- oder Verkleidungsbauteil in einem montierten Zustand gegen das Kraftfahrzeugdach (2) des Kraftfahrzeugs abdichtet.

8. Verfahren zum Herstellen eines Karosserie- oder Verkleidungsbauteiles nach einem der vorstehenden Ansprüche, das die folgenden Schritte aufweist:
a) Bereitstellen eines ersten Bauteils (6, 10) aus einem Kunststoff,
b) Anordnen eines Rohmaterials für den Kohlefaserverbundwerkstoff an dem ersten Bauteil (6, 10),
c) Aushärten des Kohlefaserverbundwerkstoffes.

9. Verfahren nach Anspruch 8, **dadurch gekennzeichnet, dass** vorgefertigte Befestigungselemente an einer Seite des ersten Bauteiles (6, 10) vor dem Aushärten des Rohmaterials so angeordnet werden, dass nach dem Aushärten des Rohmaterials die Befestigungselemente mit dem Kohlefaserverbundwerkstoff verbunden sind.

10. Verfahren zum Herstellen eines Karosserie- oder Verkleidungsbauteiles nach einem der Ansprüche 1 bis 7, **dadurch gekennzeichnet, dass** das Außenbauteil (6) und das Innenbauteil (10) als vorgefertigte Bauteile aneinander befestigt werden.
